# EUROPEAN PATENT APPLICATION

(11) **EP 0 832 932 A1**
(43) Date of publication of application: **01.04.1998**
(21) Application number: 97307105.3
(22) Date of filing: 12.09.1997
(51) Int. Cl.: C08L 55/02, C08L 67/02

(54) **Moulding compositions based on ABS polymerizates**

(30) Priority: 25.09.1996 FR 9611673
(71) Applicant: GENERAL ELECTRIC COMPANY, Schenectady, NY 12345 (US)
(72) Inventor: Guilland, Jean-Francois Henri, 95290 L'Isle Adam (FR); Pauze, Eric Henri Marie, 42400 Saint-Chamont (FR)
(74) Representative: Szary, Anne Catherine, Dr.

(57) **Abstract**

The composition according to the invention includes:
A - 100 parts by weight of an ABS polymerizate which has a rubber content of between 5 and 30 parts by weight and which may contain up to 60 per cent by weight of alpha-methylstyrene; and
B - 0.1 to 12 parts by weight of at least one polyester corresponding to the formula: 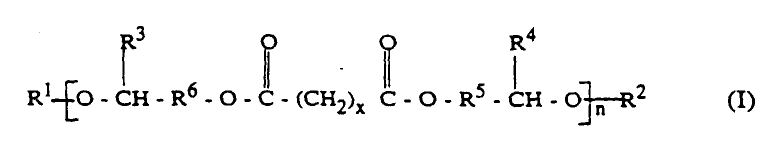 in which:
   R¹ and R², which are identical or different, denote a hydrogen atom or a C₁-C₂₀ alkyl radical;
   R³ and R⁴, which are identical or different, denote a hydrogen atom or a C₁-C₄ alkyl radical;
   R⁵ and R⁶ denote a C₁-C₆ alkylene radical;
   x is an integer from 1 to 4; and
   n has a value such that the number-average molecular mass of the polyester is between 800 and 7000.

## Description

The present invention relates in general to compositions based on ABS polymerizates and on their blends, exhibiting rheological characteristics, in particular a melt index when heated, facilitating the moulding of these compositions, in particular moulding in an open mould.

In general, compositions based on ABS polymerizates and on their blends are difficult to mould because of their rheological characteristics, in particular of their low fluidity when heated.

In order to improve the fluidity of these compositions when heated it has already been proposed to incorporate therein conventional plasticizers such as thermoplastic polyurethanes, caprolactones, phthalate monomers, adipate monomers and polyphthalates. Thus, document DE-A-43 01 678 teaches the addition, as plasticizers, to ABS powders, of phthalate monomers such as diisodecyl phthalate, di-2-ethyl hexyl phthalate and diisononyl phthalate, of adipate monomers such as di-2-ethylhexyl adipate, and of phthalate polymers. Although the addition of these plasticizers improves the rheological characteristics of the compositions, the compositions nevertheless remain relatively difficult to convert, in particular to mould.

It would therefore be desirable to develop compositions based on ABS polymerizates and on their blends, which have rheological properties, and in particular a melt index when heated, permitting easy conversion of these compositions, in particular their moulding.

It has now been found that, by adding an effective quantity of a specific class of polyesters to ABS polymerizates and their blends which have a determined content of polybutadiene, it is possible to formulate compositions based on ABS polymerizates and their blends, which exhibit rheological characteristics, in particular of fluidity when heated, greatly facilitating their conversion and in particular their moulding.

According to the invention the compositions include:
A - 100 parts by weight of an ABS polymerizate which may contain up to 60 per cent by weight of alpha-methylstyrene and which have a rubber content of between 5 and 30 parts by weight, preferably 10 to 25 parts by weight; and
B - 0.1 to 12 parts.of a polyester corresponding to the formula: 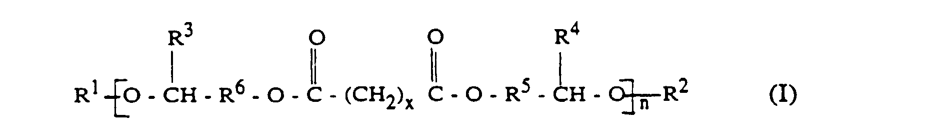 in which:
   R¹ and R², which are identical or different, denote a hydrogen atom or a C₁-C₂₀ alkyl radical;
   R³ and R⁴, which are identical or different, denote a hydrogen atom or a C₁-C₄ alkyl radical;
   R⁵ and R⁶ denote a C₁-C₆ alkylene radical, R⁵ being preferably a C₁-C₆ polymethylene radical, better the -CH₂-CH₂- radical and R⁶ being preferably a C₁-C₆ polymethylene radical, better the -CH₂- radical;
   x is an integer from 1 to 4; and
   n has a value such that the number-average molecular mass Mn, as measured by gel permeation chromatography (GPC), is between 800 and 7000, preferably between 1000 and 5000 and, better, between 2000 and 3000.

Within the scope of the present invention the ABS polymerizates include, by way of example, acrylonitrilebutadiene-styrene (ABS) polymerizates, as well as acrylonitrile-styrene-methyl or butyl acrylate (ASA) polymerizates, styrene-butadiene rubber (SBR) polymerizates, acrylonitrile-butadiene rubber (NBR) polymerizates and mixtures thereof.

Among the ABS polymerizates there may be mentioned polymerizates with a matrix of methyl acrylatestyrene-acrylonitrile, alpha-methylstyrene-acrylonitrile (AMSAN), alpha-methylstyrene-methyl methacrylate-acrylonitrile, N-phenylmaleimide-acrylonitrile-styrene (NPMI), N-phenylmaleimide-styrene, N-phenylmaleimide-acrylonitrile and styrene-acrylonitrile (SAN).

The ABS polymerizates which can be used in the present invention and methods for their preparation are well known in the art and are described, inter alia, in documents EP-A-0 248 308, DE-A-2 259 565 and US-A-3 130 177.

The ABS polymerizates are polymerizates in which the following are polymerized by grafting onto a rubber: either a monomer of styrene and methyl methacrylate or a monomer mixture of styrene, α-methylstyrene, methyl methacrylate or mixtures thereof, and of acrylonitrile, methyl methacrylate, maleic anhydride, N-substituted maleimides or mixtures thereof. The rubbers which can be used are in particular polybutadiene, butadiene/styrene copolymerizates with up to 30 % by weight of polymerized styrene, copolymerizates of butadiene and of acrylonitrile with up to 20 % by weight of acrylonitrile or copolymerizates of butadiene with up to 20 % by weight of a lower alkyl ester of acrylic or methacrylic acid (for example methyl acrylate, ethyl acrylate, methyl methacrylate and ethyl methacrylate).

The ABS polymerizates according to the invention may contain 5 to 30 parts by weight per 100 parts by weight of ABS polymerizate, preferably 10 to 25 parts by weight of rubber, in particular of polybutadiene. If the rubber content in the ABS polymerizate is higher than 30 parts by weight the required improvement in the melt index when heated is not obtained. On the other hand, if the rubber content is lower than 5 parts by weight, the product obtained does not exhibit the desired physical and mechanical properties.

The ABS polymerizates according to the invention may additionally optionally contain up to 60 per cent by weight of alpha-methylstyrene, preferably 1 to 50 per cent by weight.

The polyesters constituting the component (B) of the compositions according to the invention correspond to the general formula: 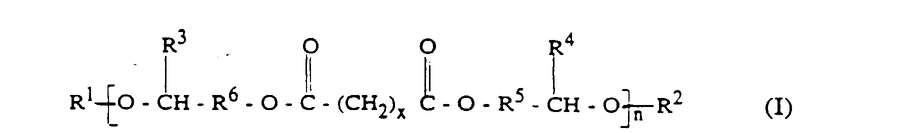 in which R¹, R², R³, R⁴, R⁵, R⁶, x and n are defined as above.

R¹ and R² preferably denote hydrogen or a C₁-C₁₀ alkyl radical such as a methyl, ethyl, propyl, butyl, pentyl, hexyl, heptyl, octyl, nonyl radical or the like.

R³ and R⁴ preferably denote hydrogen or a methyl group.

R⁵ is preferably a -CH₂CH₂- radical and R⁶ a -CH₂- radical.

As indicated above, x is an integer from 2 to 6 and is preferably equal to 4.

As indicated above, n has a value such that the number-average molecular mass Mn of the polyester is between 800 and 7000, preferably 1000 to 5000 and, better, 2000 to 3000, measured by GPC.

The polyesters which are recommended in the present invention are the polyadipates corresponding to the formula: 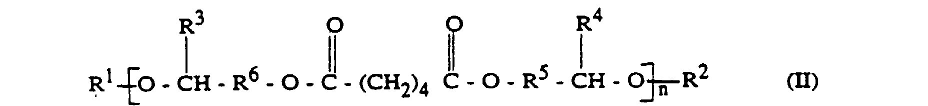 in which:
R¹, R², R³, R⁴, R⁵, R⁶ and n are defined as above.

The polyadipates of formula (II) are commercially available compounds which are sold under the name Santicizer® by the company Monsanto, Ultramol® M by the company Bayer and DIDA® by the company Henkel.

A polyadipate which is particularly recommended is the polyadipate of formula: 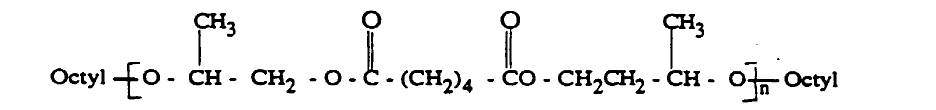 where n is such that the number-average molecular mass Mn is equal to 2700 (Mw = 4600/P=1.7).

This product is marketed under the name Santicizer® 409 A by the company Monsanto.

As indicated above, the compositions according to the invention contain 0.1 to 12 parts by weight, preferably 1 to 5 parts by weight, of the polyester (B) per 100 parts by weight of component (A).

The compositions according to the invention may also contain, in the usual quantities, adjuvants which are generally employed in ABS polymerizate compositions, such as lubricants, pigments, dyes, UV stabilizers, antioxidants, antistatic agents, coupling agents, impact strength modifiers, flame retardants, extending or reinforcing fillers and odorants.

Among the lubricants that can be employed in the compositions of the present invention there may be mentioned, by way of example, magnesium stearate, zinc stearate, polyethylene wax, paraffin wax, ethylene propylene oxide wax, butyl stearate, glycerol monostearate, barium stearate, sodium stearate, stearyl alcohol and octyl behenate.

Among the inorganic fillers that can be employed in the compositions of the present invention there may be mentioned talc, barium sulphate, calcium carbonate and magnesium aluminium hydroxycarbonate.

The flame retardants that can be employed in the compositions of the present invention are any flame retardant or mixture of flame retardants that is known to impart a flame-retardant character to the compositions based on ABS polymerizates. Among the flame retardants there may be mentioned the organic flame-retardant compounds such as tetrabromobisphenol, bistribromophenoxyethane, polybromodiphenyl ether, polybromophenol, polybromophenyl alkyl ethers, polybromobenzyl acrylate or polyacrylate, polybromocyclododecane, polybromostyrene, polybromophenylmaleimide, brominated epoxy monomers or epoxy polymers, and copolycarbonates derived from a substituted halogenated diphenol and from a diphenol, the halogen being preferably chlorine or bromine.

Preferably, furthermore, the halogenated organic flame retardant is employed in combination with a synergistic compound such as an antimony compound, for example antimony oxide.

The compositions of the present invention may also contain dyes and pigments such as, for example, titanium oxide, ultramarine blue and carbon black.

The following examples are intended to illustrate the invention. Unless stated otherwise, in these examples all the percentages and parts are expressed by weight.

### Examples 1 to 4 and comparative examples A and B

The compositions shown in Table I below were prepared by mixing various ingredients in an internal-type Banbury mixer at a temperature of 140°C for a period of 3 minutes, calendering and then granulation, and the melt index of these compositions when heated was measured. The flexural modulus, the impact strength and the temperature were measured on test pieces injection-moulded at 240°C, with a mould at 60°C, from these compositions. The results are also shown in Table I below.

**TABLE I**

| Composition (parts by weight) | | | | | | |
|---|---|---|---|---|---|---|
| | Comp. Ex. A | Ex. 1 | Ex. 2 | Comp. Ex. B | Ex. 3 | Ex. 4 |
| ABS polymerizate | | | | | | |
| Blendex 586 E | 75.3 | 75.3 | 75.3 | 37.7 | 37.7 | 37.7 |
| | | | | | | |
| Blendex 360 | 10.2 | 10.2 | 10.2 | 10.2 | 10.2 | 10.2 |
| | | | | | | |
| SAN copolymer | 14.5 | 14.5 | 14.5 | 52.1 | 52.1 | 52.1 |
| | | | | | | |
| Lubricant | 1.5 | 1.5 | 1.5 | 1.5 | 1.5 | 1.5 |
| | | | | | | |
| Carbon black | 1 | 1 | 1 | 1 | 1 | 1 |
| | | | | | | |
| Santicizer S409 A | 0 | 1 | 2 | 0 | 1 | 2 |
| | | | | | | |
| Polybutadiene content % | 5 | 5 | 5 | 5 | 5 | 5 |
| | | | | | | |
| Melt index when heated (220°C/10 kg) g/10 min. | 9.1 | 10.9 | 13.1 | 19.3 | 25.7 | 28.9 |
| | | | | | | |
| Flexural modulus - MPa | 3270 | 3370 | 3335 | 3220 | 3290 | 3270 |

The characteristics of the resins employed in the ABS polymerizates of the examples are shown in Table II below.

**TABLE II**

| | |
|---|---|
| Blendex 586E: Pure AMSAN resin | |
| % AMS : 68 | Mw = 100,000 g/mol |
| % S : 3 | |
| % AN : 29 | |
| | |
| Blendex 360: Grafted rubber | |
| % S : 37 | Mw = 100,000 g/mol |
| % AN : 12 | |
| % PBU : 50 | |
| | |
| SAN copolymer: % S : 72 | Mw = 105,000 g/mol |
| % AN : 28 | |

The examples show that the use of the polyester according to the invention markedly improves the melt index when heated without detriment to the flexural modulus.

### Examples 5 to 14 and comparative examples C to G

Compositions according to the invention and control compositions not containing the polyester according to the invention were prepared by mixing the ingredients shown in Table III below.

The melt index when heated was measured for each of the compositions.

The results are given in Table III below.

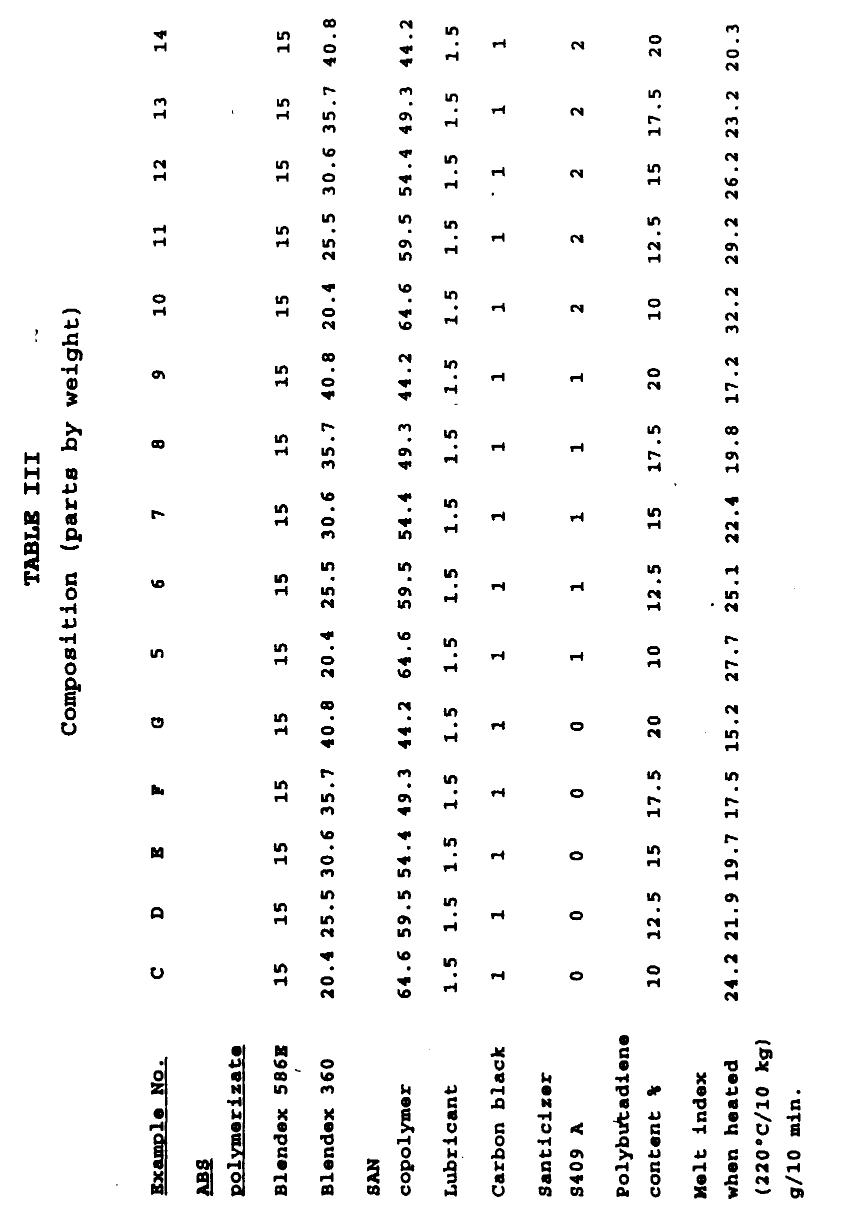

These examples show that the melt index when heated decreases with the increase in the polybutadiene content in the ABS polymerizate, but that the use of the polyesters according to the invention appreciably improves the melt index when heated even in the case of compositions comprising ABS polymerizates which have high polybutadiene contents.

### Examples 15 to 22 and comparative examples H to K

Compositions according to the invention were formulated by mixing the ingredients shown in Table IV below. The melt index when heated and the flexural modulus were measured for the compositions of Table IV on test pieces moulded from these compositions.

The results are given in Table IV below.

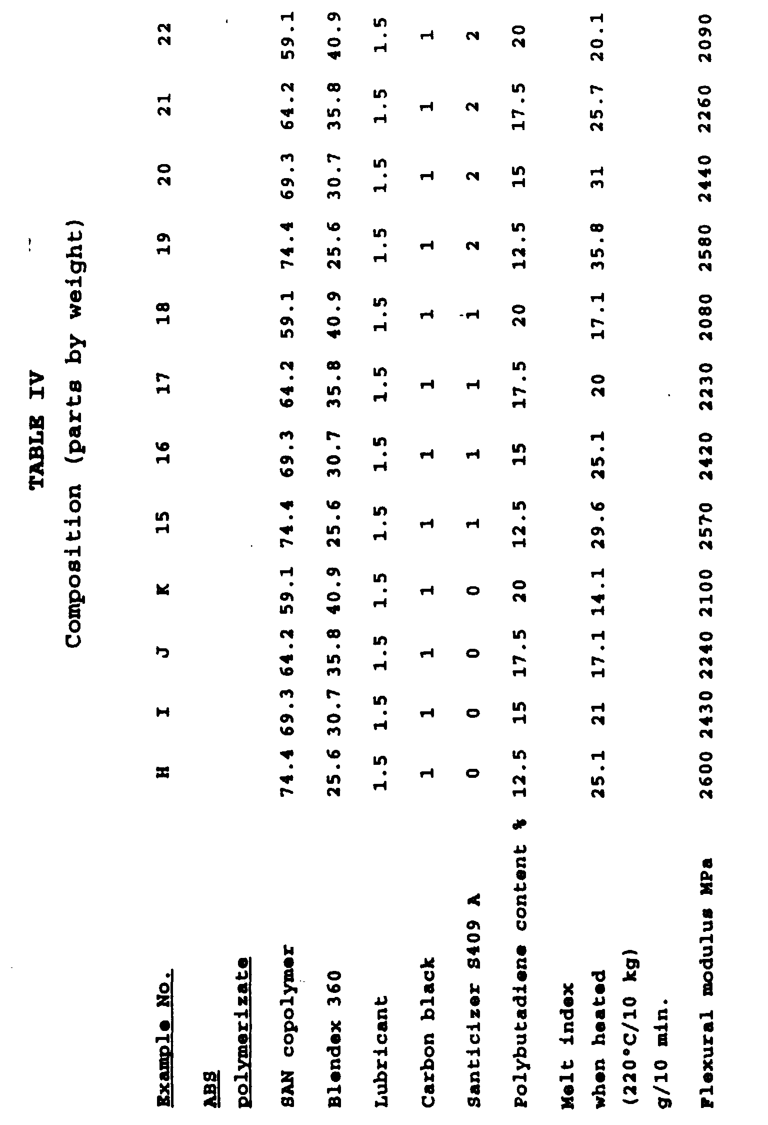

As the results in the table show, the compositions according to the invention exhibit a better melt index when heated without there being any deterioration in the flexural modulus, and this reflects a good compatibility of the polyester plasticizer in the compositions of the present invention.

### Examples 23 to 26 and comparative examples L to R

Compositions according to the invention and compositions containing conventional plasticizers of the prior art were prepared by mixing the ingredients as shown in Table V below. The melt index when heated of the compositions were measured, together with the flexural modulus, the Izod impact strength and the Vicat temperature, on test pieces moulded from these compositions.

The results are given in Table V.

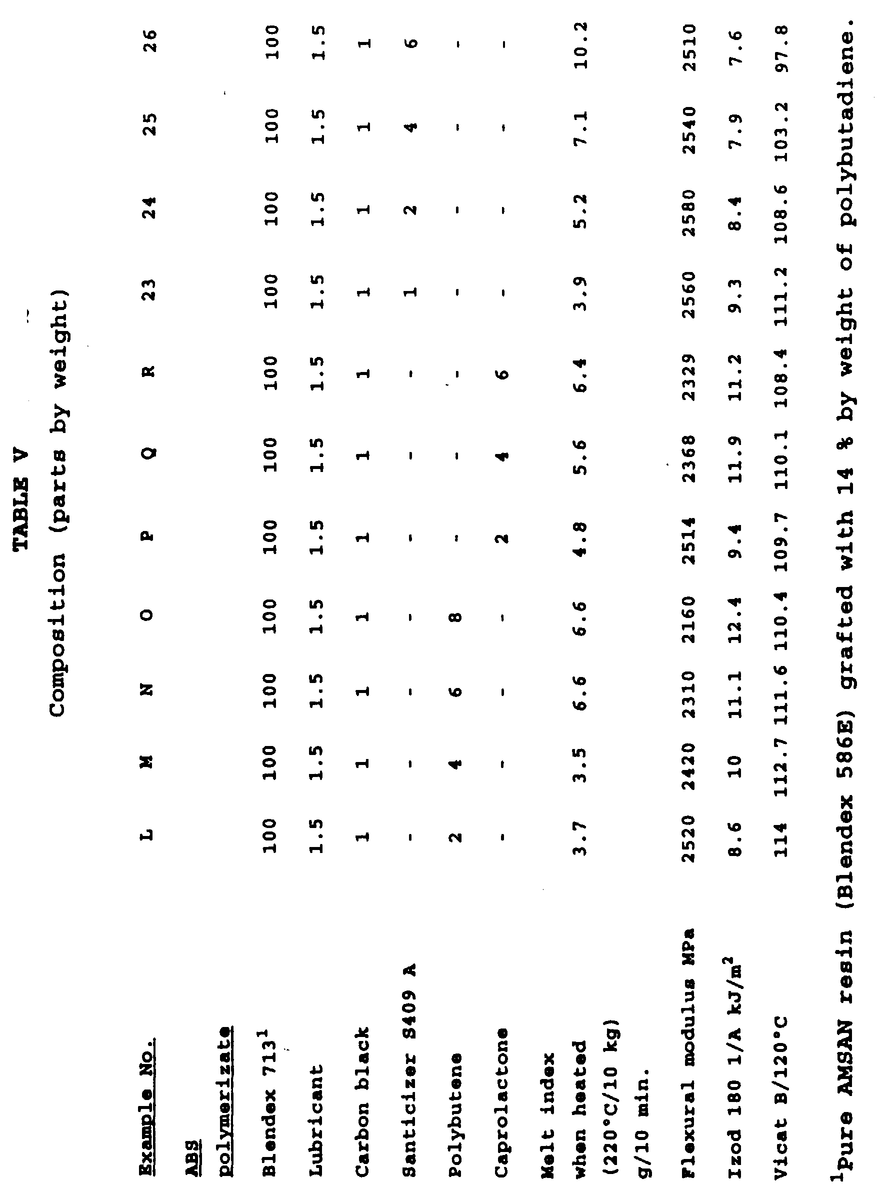

These tests show that in the case of the compositions of ABS polymerizates of quality with a low melt index the use of the polyesters according to the present invention not only improves the melt index but also does not impair the flexural modulus. On the other hand, conventional plasticizers such as polybutene and caprolactone not only improve the melt index of these compositions only to a lesser extent, but also greatly impair the flexural modulus. The drop in the flexural modulus which is observed when conventional plasticizers are employed is detrimental to the moulding properties of the compositions, generally resulting in a delamination of the composition during the moulding. This fact reflects an incompatibility of the usual plasticizers with the ABS polymerizate compositions, in particular those which have a low melt index when heated.

### Examples 27 to 34 and comparative example S

Compositions according to the invention and a comparitive composition not containing any polyester were produced by mixing the ingredients shown in Table VI. The melt index when heated was also measured for the compositions and the flexural modulus, the Vicat temperature, the 20° gloss and the haze were measured on test pieces moulded from these compositions.

The results are given in Table VI below.

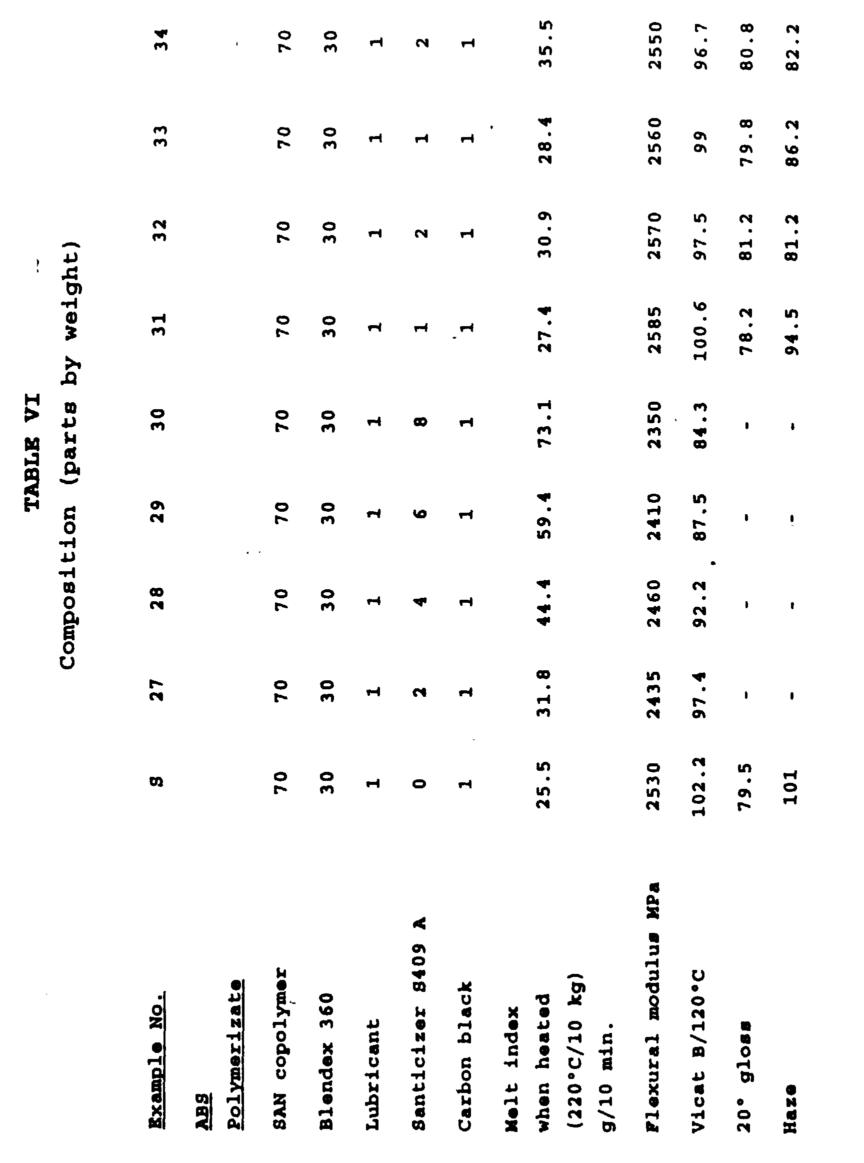

The examples show that, besides the improvement in the melt index and the maintenance of a high flexural modulus, the compositions according to the invention make it possible to obtain moulded products which have improved optical properties when compared with the compositions of the prior art, in particular insofar as the 20° gloss and the haze are concerned.

## Claims

1. Moulding composition characterized in that it includes:
A - 100 parts of ABS polymerizate or of a blend of ABS polymerizates which may contain up to 60 per cent by weight of alpha-methylstyrene and which has a rubber content of between 5 and 30, preferably 10 to 25, parts by weight; and
B - 0.1 to 12 parts of a polyester corresponding to the formula: 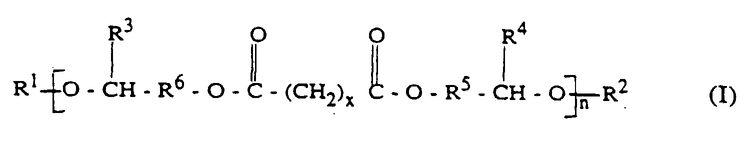 in which:
R¹ and R², which are identical or different, denote a hydrogen atom or a C₁-C₂₀ radical;
R³ and R⁴, which are identical or different, denote a hydrogen atom or a C₁-C₄ radical;
R⁵ and R⁶ denote a C₁-C₆ alkylene radical;
x is an integer from 1 to 4; and
n has a value such that the number-average molecular mass Mn, as measured by gel permeation chromatography (GPC), is between 800 and 7000, preferably 1000 to 5000 and, better, 2000 and 3000.

2. Composition according to Claim 1, characterized in that R¹ and R² denote a C₁-C₁₀ alkyl radical.

3. Composition according to Claim 1 or 2, characterized in that R³ and R⁴ denote a hydrogen atom or a methyl radical.

4. Composition according to any one of Claims 1 to 3, characterized in that R⁵ is a C₁-C₆ polymethylene radical, preferably the -CH₂CH₂- radical, and R⁶ is a C₁-C₆ polymethylene radical, preferably the -CH₂- radical.

5. Composition according to any one of Claims 1 to 4, characterized in that x is equal to 4.

6. Composition according to Claim 1, characterized in that the polyester (B) corresponds to the formula: 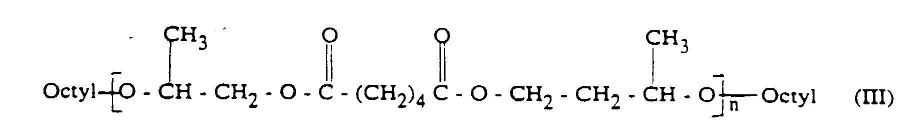 in which:
n has a value such that the number-average molecular mass Mn of the polyester is equal to 2700.

7. Composition according to any one of the preceding claims, characterized in that the polyester (B) is present in a proportion of 1 to 5 parts by weight.

8. Composition according to any one of the preceding claims, characterized in that the ABS polymerizate contains 1 to 50 per cent by weight of alpha-methylstyrene.

9. Composition according to any one of the preceding claims, characterized in that the ABS polymerizate includes acrylonitrile-butadiene/styrene polymerizates, acrylonitrile-styrene-methyl or butyl acrylate (ASA) polymerizates, styrene-butadiene rubber (SBR) polymerizates, acrylonitrile-butadiene rubber (NBR) polymerizates and mixtures thereof.

10. Composition according to any one of the preceding claims, characterized in that it additionally includes one or more ingredients chosen from antioxidants, internal or external lubricants, flame retardants, dyes, pigments, UV stabilizers, antistatic agents, coupling agents, impact strength modifiers, reinforcing and extending fillers and odorants.
